# EUROPEAN PATENT APPLICATION

(11) **EP 2 990 650 A1**
(43) Date of publication of application: **02.03.2016**
(21) Application number: 15180912.6
(22) Date of filing: 13.08.2015
(51) Int. Cl.: F04D 5/00, F16N 7/18, F01D 25/20

(54) **PUMP ON SHAFT**

(30) Priority: 26.08.2014 US 201462041944 P
(71) Applicant: United Technologies Corporation, Hartford, CT 06101 (US)
(72) Inventor: DUONG, Hung, Unionville, CT Connecticut 06085 (US); KURZ, Leslie Charles, Hebron, CT Connecticut 06248 (US)
(74) Representative: Stevens, Jason Paul

(57) **Abstract**

A pump assembly includes a housing (14) having a first lobe (18A). A shaft rotates (20) at least partially inside the housing (14) about an axis and has an outer surface (20S). A base member (16A, 30A, 30B, 30C, 30D, 44A, 44B) is mounted on the shaft (20) so as to rotate with the shaft (20). The base member (16A, 30A, 30B, 30C, 30D, 44A, 44B) is mounted on a location of the shaft (20) such that at least a portion of the base member (16A, 30A, 30B, 30C, 30D, 44A, 44B) is located within the first lobe (18A). A fin (32) protrudes generally axially from the base member. The fin (32) is configured to extend outward from the outer surface (20S) of the shaft (20). Rotation of the shaft causes the fins to scoop lubricant out of the lobe (18A), to avoid undesired accumulation of lubricant.

## Description

### BACKGROUND

The present embodiments relate generally to pumps.

Lubricant, such as oil, is used in various applications to reduce wear between components and to cool such components. In many applications, the components needing lubrication are located within a housing. As is known in the art, to keep the lubricant within the housing where the components are located, a seal can be used at an opening of the housing to keep the lubricant contained within the housing.

However, in various applications the housing may rotate under certain conditions, causing an excessive volume of the lubricant to be directed to and accumulate at a single region of the housing. When the housing is rotated in a direction such that the single region where the lubricant accumulates is adjacent the seal, the seal can fail to retain the lubricant within the housing. This can result in reduced life of the components within the housing, as a loss of lubricant from the housing can increase wear of, and stresses on, the components within the housing.

### SUMMARY

One embodiment includes a pump assembly with a housing having a first lobe. A shaft rotates at least partially inside the housing about an axis and has an outer surface. A base member is mounted on the shaft so as to rotate with the shaft. The base member is mounted on a location of the shaft such that at least a portion of the base member is located within the first lobe. A fin protrudes generally axially from the base member. The fin is configured to extend outward from the outer surface of the shaft.

Another embodiment includes a gearbox having a gearbox housing with a first lobe. A gear shaft at least partially extends into and rotates within the gearbox housing about an axis and has an outer surface which is generally solid. A seal is disposed circumferentially around the gear shaft within the housing. A base member is mounted on the gear shaft so as to rotate with the gear shaft inside the gearbox housing. The base member is mounted on a location of the gear shaft such that at least a portion of the base member is located within the first lobe. A first fin protrudes generally axially from the base member. The first fin is configured to extend outward from the outer surface of the gear shaft.

A further embodiment includes a method of pump a lubricant. The method includes directing the lubricant to a lobe region of a housing and rotating a shaft during operation of an engine. Rotating the shaft rotates a base member mounted on the shaft having a first fin and a second fin both fixed to the base member and both extending generally radially out from the shaft. A space is located between the first fin and the second fin. Lubricant is scooped from the lobe region into the space between the first and second fin. The lubricant is directed from the space to an area of the housing away from the lobe region.

### BRIEF DESCRIPTION OF THE DRAWINGS

FIG. 1 is a perspective view of a gearbox mounted on an engine.
FIG. 2A is a perspective view of an embodiment of a pump assembly of the gearbox of FIG. 1.
FIG. 2B is a perspective view of another embodiment of a pump assembly of the gearbox of FIG. 1.
FIGS. 3A to 3C show different configurations of fins suitable for use with the embodiments of the pump assembly of FIG. 2A or 2B.

While the above-identified drawing figures set forth multiple embodiments of the invention, other embodiments are also contemplated. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

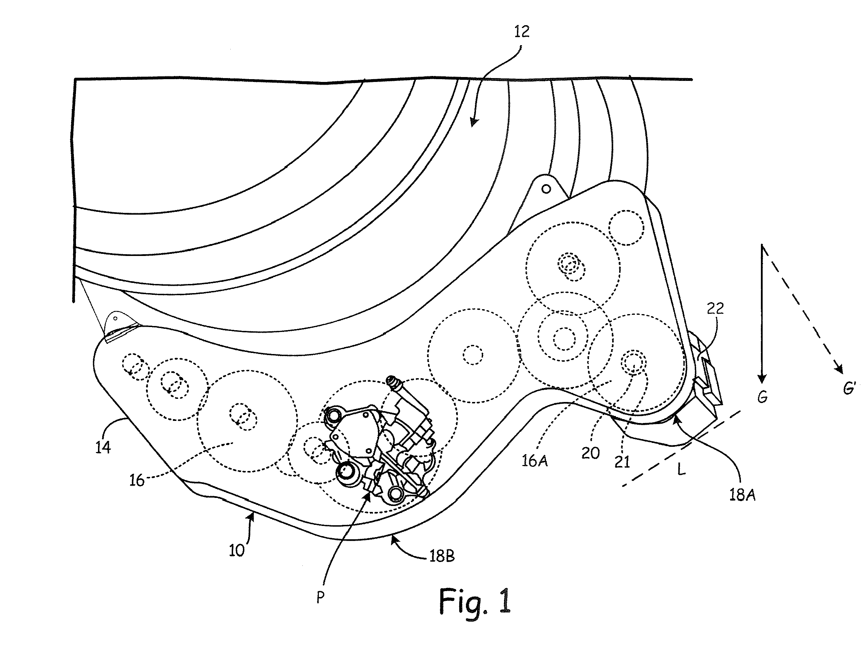

FIG. 1 is a perspective view showing gearbox 10 mounted to engine 12. Gearbox 10 includes housing 14 within which gears 16, including gear 16A, are located. Gears 16 are shown as simplified throughout the figures. Housing 14 has a geometry which defines a first lobe 18A and a second lobe 18B. In one example, gearbox 10 can include lobes 18A and 18B to better enable gearbox 10 to be accommodated within a complexity of available space around engine 12. At least a portion of gear 16A is located within first lobe 18A.

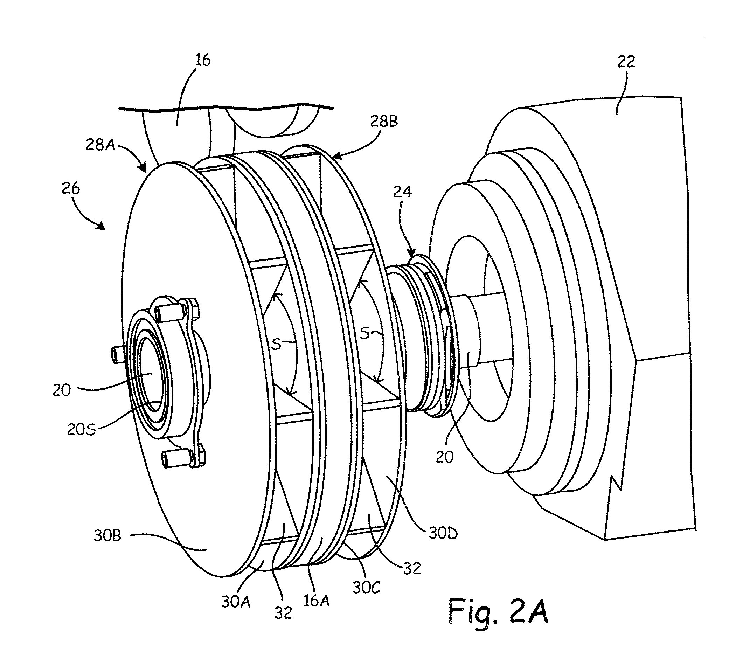

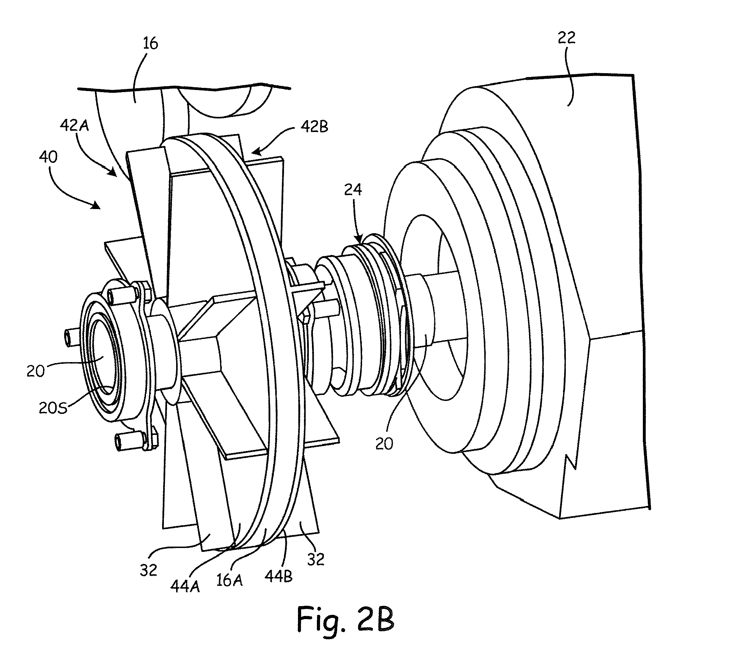

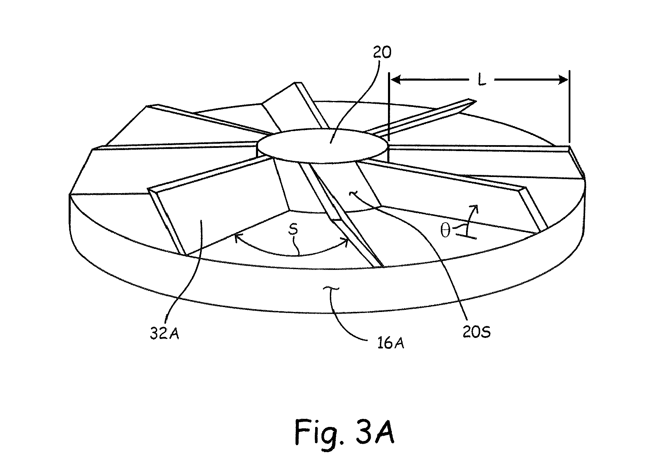

Gearbox 10 operates in a conventional manner to receive torque from engine 12 and modulate and/or transfer that torque to any component, such as component 22, coupled to gearbox 10. Gear 16A is mounted on shaft 20, which extends from gear 16A inside of housing 14 and into component 22 (also shown, e.g., in FIGS. 2A and 2B). Shaft 20 has outer surface 20S (shown in, e.g., FIG. 3A) which can be generally solid, meaning outer surface 20S does not have apertures for receiving or dispensing fluid, such as lubricant, and therefore shaft 20 does not transport fluid within shaft 20. As gear 16A rotates, it drives gear shaft 20 which supplies rotational power to component 22. Component 22 can be any component capable of being driven by gearbox 10, such as a fuel pump, generator, or hydraulic pump.

In one example application, engine 12 can be a gas turbine engine used on an aircraft (not shown). At various times, the aircraft will undertake differing flying conditions. Line G represents a direction at which gravity acts on the engine 12, and thus gearbox 10 mounted to engine 12, when the aircraft is stationary or traveling in a generally linear line of flight (e.g. flying straight ahead, taking off, landing). Line G' represents a direction at which gravity acts on gearbox 10 when the aircraft is at an angle, such as during a turn, which causes the gearbox 10 to rotate.

When the aircraft is at a flight condition with gravitational force as indicated by G', first lobe 18A can be at or near a lowest portion L of gearbox 10. When lobe 18A is at or near a lowest portion L of gearbox 10, at least a portion of lubricant (e.g., oil) within housing 14 is directed by gravity G' to lobe 18A and accumulates at lobe 18A. Because shaft 20 extends out from housing 14 at or near lobe 18A, housing 14 defines an opening 21 that is present at or near lobe 18A. To help prevent lubricant from leaking out of opening 21 in housing 14 where shaft 20 extends out from housing 14, seal 24 (shown in FIGS. 2A and 2B) is disposed circumferentially around shaft 20 at a location on shaft 20 where shaft 20 begins to extend out from housing 14. However, when lobe 18A is at or near a lowest portion L of gearbox 10 an excessive volume of lubricant collects at lobe 18A which seal 24 may be incapable of containing within housing 14.

To prevent lubricant from escaping housing 14, pump assembly 26 can be used. FIG. 2A illustrates a perspective view of an embodiment of pump assembly 26 for use in gearbox 10. However, pump assembly 26 can be used in any application where a fluid is to be displaced.

Pump assembly 26 as shown in the embodiment of FIG. 2A can include first scoop 28A and second scoop 28B. First scoop 28A includes plates (i.e. base members) 30A and 30B as well as fins 32. Fins 32 are attached on one side to plate 30A and protrude generally axially out from plate 30A to plate 30B where fins 32 are attached on another side. In the illustrated embodiment, fins 32 protrude out from plate 30A such that fins 32 are perpendicular to plates 30A and 30B that are arranged parallel to one another (i.e. are attached to both plates 30A and 30B at angle of 90°). Fins 32 are attached to plates 30A and 30B so as to be configured to extend generally linearly outward along plates 30A and 30B from outer surface 20S of shaft 20 when scoop 28A is mounted onto shaft 20. In one embodiment, fins 32 have a length L (shown in, e.g., FIG. 3A) of approximately 3.5 inches (8.9 cm) and a shaft 20 diameter of approximately 2 inches (5 cm). Scoop 28A is mounted or assembled onto shaft 20 by any suitable means, such as press-fitting and keying. Scoop 28A can be mounted on shaft 20 such that plate 30A interfaces with or is adjacent to gear 16A, resulting in scoop 28A being mounted on shaft 20 at a location of shaft 20 such that a portion of scoop 28A is at all times located within lobe 18A. Thus, housing 14 is close to only portions of scoop 28A located within lobe 18A. Likewise, second scoop 28B includes plates 30C and 30D as well as fins 32, and is configured similar to that described for scoop 28A.

When engine 12 operates, shaft 20 rotates. As shaft 20 rotates, scoops 28A and 28B rotate with shaft 20 at a rotational speed substantially the same as shaft 20. As scoops 28A and 28B rotate, lubricant that has accumulated at lobe 18A is scooped (i.e. enters) within at least one space S between fins 32. The lubricant then rotates with scoops 28A and 28B within space S until the lubricant is ejected from space S of scoops 28A and 28B to a location within housing 14 other than lobe 18A. Lubricant merely enters space S, rotates with scoops 28A and 28B, and is ejected or flung from scoops 28A and 28B to portions of housing 14 other than lobe 18A with substantially no pressurization of the lubricant. Thus, scoops 28A and 28B can displace the accumulated lubricant from lobe 18A to other locations within housing 14 which are not at a lowest portion L of gearbox 10 and prevents the lubricant from escaping housing 14 at seal 24.

FIG. 2B shows a perspective view of an embodiment of pump assembly 40 for use in gearbox 10. However, pump assembly 40 can be used in any application where a fluid is to be displaced. Pump assembly 40 as shown in the embodiment of FIG. 2B is similar to pump assembly 26 of FIG. 2A, except that scoops 42A and 42B each include only a single plate 44A and 44B, respectively. Scoops 42A and 42B are mounted or assembled onto shaft 20 such that plates 44A and 44B interface with or are adjacent to gear 16A, resulting in scoops 44A and 44B being mounted on shaft 20 at locations of shaft 20 such that a portion of both scoops 44A and 44B are at all times located within lobe 18A. Pump assembly 40 operates in the same manner as that described previously for pump assembly 26.

To displace the lubricant from lobe 18A to a particular location within housing 14, fins 32 can be shaped accordingly. In some cases, it may be desirable to displace the lubricant to other gears 16 within housing 14. In other cases, it may be desirable to displace the lubricant to other lobe regions of housing 14, such as lobe 18B, where a main oil pump P (shown in FIG. 1) is positioned. By displacing the lubricant to lobe 18B, main oil pump P can then remove the lubricant from housing 14. In embodiments where main oil pump P is located at lobe 18B and a pump assembly (e.g., 26 or 40) is used at lobe 18A, a lower capacity main oil pump P can be used with gearbox 10. This allows for reductions in weight and requires smaller clearances for gearbox 10.

FIGS. 3A to 3C illustrate different configurations of fins 32 for use in displacing lubricant to desired locations within housing 14 suitable for use with the embodiments of the pump assembly 26 of FIG. 2A or 40 of FIG. 2B. In each of FIGS. 3A to 3C fins 32 are attached directly to gear 16A (i.e. base member), and as such no separate plate components (e.g., 30A) are used. Fins 32 can be separate components attached to gear 16A or fins 32 can be made integral as a single piece with gear 16A.

FIG. 3A shows fins 32A which are no longer perpendicular to the base member, as was shown in FIGS. 2A and 2B. Rather, fins 32A protrude out from base member/gear 16A at an angle θ other than 90° relative gear 16A. The angle θ at which fins 32A protrude relative to gear 16A can range between 0° and 90° as well as between 90° and 180°. In the illustrated embodiment, fins 32A are at an angle θ of approximately 30°. In other embodiments, fins 32A can be at an angle θ of approximately 150°. In further embodiments, fins 32A be at an angle θ ranging from 20° to 40°, or from 140° to 160°. The particular angle θ of fins 32A can vary depending on the desired location within housing 14 to which the lubricant is desired to be displaced to from lobe 18A. In the illustrated embodiment, fins 32A are all at a same angle θ, but in other embodiments fins 32A can be at differing angles θ.

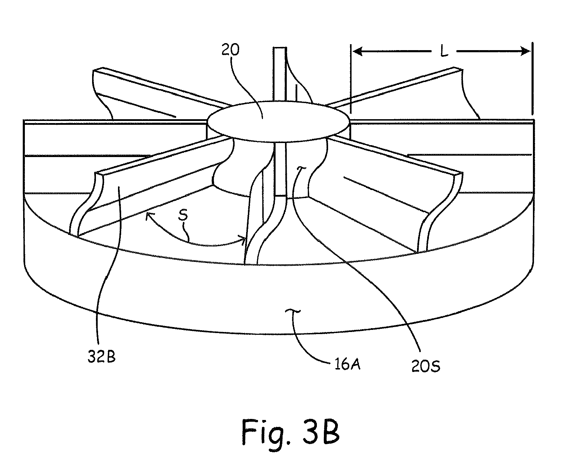

FIG. 3B illustrates fins 32B which are shaped generally as a reverse-"S" shape (i.e. wavy) when viewed looking radially inward. Fin 32B curves in a first circumferential direction as fin 32B begins to protrude out from base member/gear 16A in the axial direction then alternates to curve in a second, opposite circumferential direction as fin 32B further protrudes out from gear 16A in the axial direction. In the illustrated embodiment, fins 32B all have a reverse-"S" shape for entire length L of fins 32B, but in other embodiments fins 32B can have a reverse-"S" shape on only a portion of length L of fins 32B. Additionally, in the illustrated embodiment fins 32B all have a same reverse-"S" shape, but in further embodiments fins 32B can have differing reverse-"S", "S", and/or helical shapes.

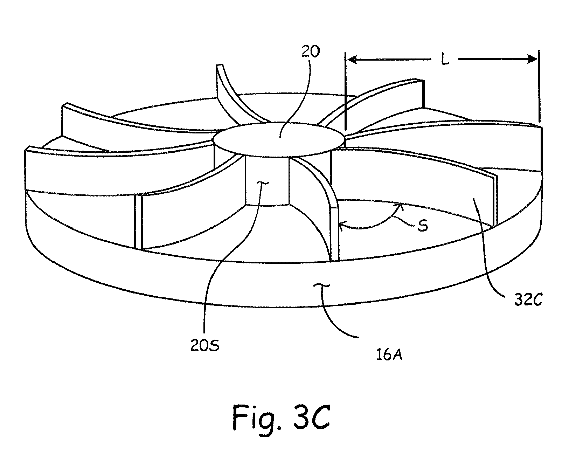

FIG. 3C shows fins 32C which curve along length L as fins 32C extend out from outer surface 20S of shaft 20 along base member/gear 16A. This illustrated geometry of fins 32C is sometimes referred to as a forward curved configuration. In the illustrated embodiment fins 32C all have curvature along an entire length L and have equal degrees of curvature along length L. However, in other embodiments fins 32C can have curvature only on a portion of length L and/or can have differing degrees of curvature along length L.

Moreover, although space S between fins 32 has been shown to be generally constant between all fins 32, in other embodiments space S can vary between fins 32. Varying space S between fins 32 can result in differing volumes of lubricant being displaced with a single scoop.

### Discussion of Possible Embodiments

The following are non-exclusive descriptions of possible embodiments of the present invention.

A pump assembly comprising: a housing with a first lobe; a shaft which rotates at least partially inside the housing about an axis and has an outer surface; a base member mounted on the shaft so as to rotate with the shaft, wherein the base member is mounted on a location of the shaft such that at least a portion of the base member is located within the first lobe; and a fin protruding generally axially from the base member, wherein the fin is configured to extend outward from the outer surface of the shaft.

The pump assembly of the preceding paragraph can optionally include, additionally and/or alternatively, any one or more of the following features, configurations and/or additional components:

The base member is a gear.

The base member is a first plate.

The first plate interfaces with a gear mounted on the shaft.

A second plate mounted on the shaft at an opposite side of the fin from the first plate.

The fin protrudes perpendicular to the base member.

The fin protrudes at an angle relative to the base member ranging between 0° and 90° or 90° and 180°.

The fin is generally reverse-"S" shaped.

The fin extends generally linearly along the base member.

The fin is curved as it extends outward along the base member.

A plurality of additional fins fixed to the base member and configured to extend outward from the outer surface of the shaft.

A gearbox comprising: a gearbox housing with a first lobe; a gear shaft which at least partially extends into and rotates within the gearbox housing about an axis and has an outer surface which is generally solid; a seal disposed circumferentially around the gear shaft within the housing; a base member mounted on the gear shaft so as to rotate with the gear shaft inside the gearbox housing, wherein the base member is mounted on a location of the gear shaft such that at least a portion of the base member is located within the first lobe; and a first fin protruding generally axially from the base member, wherein the first fin is configured to extend outward from the outer surface of the gear shaft.

The gearbox of the preceding paragraph can optionally include, additionally and/or alternatively, any one or more of the following features, configurations and/or additional components:

A second fin protruding generally axially from the base member, wherein the second fin is configured to extend outward from the outer surface of the gear shaft; and a space between the first fin and the second fin, wherein a lubricant located at the first lobe is scooped within the space and removed from the first lobe by rotation of the base member.

The base member is a gear.

The base member is a first plate which interfaces with a gear mounted on the gear shaft.

A main oil pump located at or near a second lobe of the gearbox housing.

A method of pumping a lubricant, the method comprising: directing the lubricant to a lobe region of a housing; rotating a shaft during operation of an engine, wherein rotating the shaft rotates a base member mounted on the shaft having a first fin and a second fin both fixed to the base member and both extending generally radially out from the shaft, wherein a space is located between the first fin and the second fin; scooping the lubricant from the lobe region into the space between the first fin and the second fin; and directing the lubricant from the space to an area of the housing away from the lobe region.

The method of the preceding paragraph can optionally include, additionally and/or alternatively, the following techniques, steps, features and/or configurations:

Directing the lubricant to an area of the housing away from the lobe region comprises directing the lubricant to a gear.

Directing the lubricant to an area of the housing away from the lobe region comprises directing the lubricant to a second lobe region with a main oil pump.

Directing the lubricant to a lobe region of the housing comprises rotating the housing.

Any relative terms or terms of degree used herein, such as "generally", "substantially", "approximately", and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, temporary alignment or shape variations induced by operational conditions, and the like.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims. For example, features described with respect to any given embodiment can be utilized with respect to any other disclosed embodiment, as desired for particular applications.

## Claims

1. A pump assembly (26) comprising:
a housing (14) with a first lobe (18A);
a shaft (20) which rotates at least partially inside the housing (14) about an axis and has an outer surface (20S);
a base member (16A, 30A, 30B, 30C, 30D, 44A, 44B) mounted on the shaft (20) so as to rotate with the shaft (20), wherein the base member (16A, 30A, 30B, 30C, 30D, 44A, 44B) is mounted on a location of the shaft (20) such that at least a portion of the base member (16A, 30A, 30B, 30C, 30D, 44A, 44B) is located within the first lobe (18A); and
a fin (32) protruding generally axially from the base member (16A, 30A, 30B, 30C, 30D, 44A, 44B), wherein the fin (32) is configured to extend outward from the outer surface (20S) of the shaft (20).

2. The pump assembly of claim 1, wherein the base member (16A, 30A, 30B, 30C, 30D, 44A, 44B) is a gear (16A).

3. The pump assembly of claim 1, wherein the base member (16A, 30A, 30B, 30C, 30D, 44A, 44B) is a first plate (30A, 30C, 44A, 44B), which preferably interfaces with a gear (16A) mounted on the shaft (20), and wherein the assembly preferably further comprises a second plate (30B, 30D) mounted on the shaft (20) at an opposite side of the fin (32) from the first plate (30A, 30C).

4. The pump assembly of any preceding claim, wherein the fin (32) protrudes perpendicular to the base member (16A, 30A, 30B, 30C, 30D, 44A, 44B), or protrudes at an angle relative to the base member (16A, 30A, 30B, 30C, 30D, 44A, 44B) ranging between 0° and 90° or 90° and 180°.

5. The pump assembly of any of claims 1 to 4, wherein the fin (32) is generally reverse-"S" shaped.

6. The pump assembly of any preceding claim, wherein the fin (32) extends generally linearly along the base member (16A, 30A, 30B, 30C, 30D, 44A, 44B).

7. The pump assembly of any of claims 1 to 5, wherein the fin (32) is curved as it extends outward along the base member (16A, 30A, 30B, 30C, 30D, 44A, 44B).

8. The pump assembly of any preceding claim, further comprising a plurality of additional fins (32) fixed to the base member (16A, 30A, 30B, 30C, 30D, 44A, 44B) and configured to extend outward from the outer surface (20S) of the shaft (20).

9. A gearbox (10) comprising:
a gearbox housing (14) with a first lobe (18A);
a gear shaft (20) which at least partially extends into and rotates within the gearbox housing (14) about an axis and has an outer surface (20S) which is generally solid;
a seal (24) disposed circumferentially around the gear shaft (20) within the housing (14);
a base member (16A, 30A, 30B, 30C, 30D, 44A, 44B) mounted on the gear shaft (20) so as to rotate with the gear shaft (20) inside the gearbox housing (14), wherein the base member (16A, 30A, 30B, 30C, 30D, 44A, 44B) is mounted on a location of the gear shaft (20) such that at least a portion of the base member (16A, 30A, 30B, 30C, 30D, 44A, 44B) is located within the first lobe (18A); and
a first fin (32) protruding generally axially from the base member (16A, 30A, 30B, 30C, 30D, 44A, 44B), wherein the first fin (32) is configured to extend outward from the outer surface (20S) of the gear shaft (20).

10. The gearbox of claim 9, further comprising:
a second fin (32) protruding generally axially from the base member (16A, 30A, 30B, 30C, 30D, 44A, 44B), wherein the second fin (32) is configured to extend outward from the outer surface (20S) of the gear shaft (20); and
a space (S) between the first fin (32) and the second fin (32), wherein a lubricant located at the first lobe (18A) is scooped within the space (S) and removed from the first lobe (18A) by rotation of the base member (16A, 30A, 30B, 30C, 30D, 44A, 44B).

11. The gearbox of claim 9 or claim 10, wherein the base member (16A, 30A, 30B, 30C, 30D, 44A, 44B) is a gear (16A), or wherein the base member (16A, 30A, 30B, 30C, 30D, 44A, 44B) is a first plate (30A, 30C), which interfaces with a gear (16A) mounted on the gear shaft (20).

12. The gearbox of any of claims 9 to 12, further comprising:
a main oil pump (P) located at or near a second lobe (18B) of the gearbox housing (14).

13. A method of pumping a lubricant, the method comprising:
directing the lubricant to a lobe region (18A) of a housing (14);
rotating a shaft (20) during operation of an engine (12), wherein rotating the shaft (20) rotates a base member (16A, 30A, 30B, 30C, 30D, 44A, 44B) mounted on the shaft (20) having a first fin (32) and a second fin (32) both fixed to the base member (16A, 30A, 30B, 30C, 30D, 44A, 44B) and both extending generally radially out from the shaft (20), wherein a space (S) is located between the first fin (32) and the second fin (32);
scooping the lubricant from the lobe region (18A) into the space (S) between the first fin (32) and the second fin (32); and
directing the lubricant from the space (S) to an area of the housing (14) away from the lobe region (18A).

14. The method of claim 13, wherein directing the lubricant to an area of the housing (14) away from the lobe region (18A) comprises directing the lubricant to a gear (16), or directing the lubricant to a second lobe region (18B) with a main oil pump (P).

15. The method of claim 13 or claim 14, wherein directing the lubricant to a lobe region of the housing (14) comprises rotating the housing (14).
